# EUROPEAN PATENT SPECIFICATION

(11) **EP 4 356 033 B1**
(45) Date of publication and mention of the grant of the patent: **09.04.2025**
(21) Application number: 22732225.2
(22) Date of filing: 09.06.2022
(51) Int. Cl.: F16L 3/13, F16B 2/22, H02G 3/32

(54) **BRACKET SYSTEM**
HALTERUNGSSYSTEM
SYSTÈME DE SUPPORT

(30) Priority: 18.06.2021 BE 202105479
(43) Date of publication of application: 24.04.2024
(73) Proprietor: OPDAMO BV, 3960 Opitter (BE)
(72) Inventor: DANIELS, Stefan, 3960 Bree (BE); MORAS, Didier, 3960 Bree (BE)
(74) Representative: Arnold & Siedsma
(86) International application number: PCT/EP2022/065715
(87) International publication number: WO 2022/263289

(56) References cited:
- WO-A1-2020/257841
- DE-U1- 202008 000 510
- US-A- 3 540 687
- US-A1- 2018 236 653

## Description

### TECHNICAL FIELD OF THE INVENTION

This invention relates to bracket systems for plumbing, heating and electrical systems and air extraction systems, more specifically for drain lines, dust collection systems and water lines.

### BACKGROUND OF THE INVENTION

There are different types of bracket systems available, such as hangers, mounting brackets, OBO Quick clips and similar.

The most common bracket system comprises two elements shaped like half-open rings. These two elements fasten to one another by means of two screws. One of the two elements is fixed to the surface to which the piping system is to be installed. The materials used are usually aluminium or hardened steel.

The disadvantage of this commonly used bracket system is the difficulty in achieving a connection between the two elements.

### SUMMARY OF THE INVENTION

The purpose of the invention is to provide a bracket system enabling faster and easier achievement of a connection between the two elements of this bracket system.

To this end, the invention provides a bracket system that comprises at least a first element and a second element, where the second element comprises a connecting element configured to connect to a flange on the first element.

The invention is based on the understanding that the method widely used to achieve a connection between the two parts of the bracket system in practice is not optimal. The pipes used in the various piping systems are often long and frequently installed at varying heights, to allow for sloped drain lines for example. It has been discovered that if the connection is achieved using a second element with a connecting element for the first element, this produces several advantages. The first advantage is that installation can be completed faster and the installation process simplified. A second advantage is that this allows the connection to be disassembled and reassembled. A third advantage is that pipes can be easily pressed into place in the bracket system without further action.

Preferably, the second element further comprises a base and optionally, a flange. The base can be of different heights. These different heights can be used to vary the pipe slope angle in a piping system. The flange provides structural stability. The presence of a flange makes it also possible to connect multiple second elements to each other, thus providing full flexibility in adjusting the pipe slope angle in a piping system by combining second elements with different base heights.

Preferably, the first element further comprises a base. The presence of a base simplifies the manufacturing process. It also adds a further variable that can be used in adjusting the pipe slope angle in a piping system using the bracket system of the present invention.

US 3 540 687 A discloses a bracket system having two walls with slots in them and being closed at the end in order to form a stop for the first element.

, In bracket systems, such as for example disclosed in US 2013/015288, WO 2020/257841, US2018/0236653, DE 20 2008 000 510 U1 or DE 70 14 140U, the shape of the connecting element is typically near-symmetrical in relation to the axis (B) of the second element. Symmetry of the connecting element ensures a stable installation through the symmetrical application of forces.

In US 2013/0015288 for example, the connecting element (52) comprises two walls (42, 44), where each wall comprises a slot configured to slide over the flange (28) on the first element. By connecting the two elements of the bracket system in this way, no further fixation between the two elements is necessary, reducing the time required for installation and improving operational safety.

As shown in US 2013/0015288, or for example Figures 5 to 9 of DE 70 14 140 U1, the connecting element typically comprises two walls located opposite each other, where each wall comprises a slot configured to slide over or engage with the flange of the first element. The walls' opposite locations ensure an even distribution of the forces required to hold together the first and second elements.

A downsize with these existing bracket systems, a disadvantage of these systems is that the two elements can shift relative to each other, and can even lose the mutual connection. To prevent this, the existing systems need to add further features to the system, such as a spring element 30 to the connecting element in US 2018/0236653, retainer ridges 57 to the connecting element in US 2013/0015288, grip elements 1705 for the connecting element in WO 2020/257841, or retainer clips (21, 23) and cutouts (11, 14) on the two members in DE 20 2008 000 510 U1. These additional elements increase the complexity of the system in manufacturing and/or assembly

It has been an objective of the present invention to address this problem without adding further complexity to system. In the bracket system according to the invention the distance between the two opposite walls of the connecting element narrows in the direction perpendicular towards the central axis (A) in such a way as to ensure a close-fit connection between the flange of the first element and the connecting element. This decreasing distance between the two opposite walls in the direction perpendicular towards the central axis (A) ensures a close-fitting connection between the first and second elements, improving the security of the mount.

Preferably, the walls are funnel-shaped in cross-section in the plane perpendicular to the central axis (A), guaranteeing a secure mount.

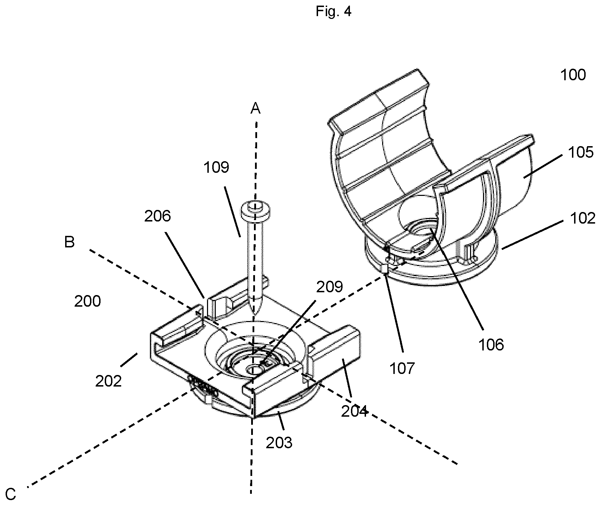

Each wall comprises a notch. Notches give the walls flexibility, allowing for quick disassembly of the elements and making the bracket system suitable for reuse. In a particular embodiment said notches are positioned centrally, i.e. in a plane comprising the central axis (A) and the latitude axis (B) as shown in Figure 4. Preferably, the base of the second element is circular in shape. A circular base enables a simpler, less expensive manufacturing process.

Preferably, the flange of the second element is circular in shape. A circular flange enables a simpler, less expensive manufacturing process. In addition, in the embodiment according to the invention wherein the walls of the connection element have a notch, this shape together with the narrowing of the walls in the direction of the central axis (A) will assist in an enhanced mutual fixation of the two elements. In the particular embodiment wherein the notches are centrally positioned, these notches not only enhance the mutual fixation, but also enable a quick centring of the elements (100) and (200) of the bracket system (300), which may be beneficial when for example straight piping over a large distance is required.

Since the two elements in the bracket system according to the invention are only slidably connected to each other in a close-fit configuration, a further advantage of the circular flange is that it allows mutual rotation of the two elements with respect to one another whilst connected, it accordingly enables a rotatable connection between the flange and the connection element. In the particular embodiment wherein the wall of the connecting element comprises the centrally positioned notches, the circular flange enables a rotatable connection between the flange and the connection element, around the central axis (A). If the two elements can rotate in relation to one another, this enables optimal adjustment to pipe bends and secure mounting in any direction, extending the scope of the bracket system's application.

Preferably, the base of the first element is circular in shape. A circular base enables a simpler, less expensive manufacturing process.

Preferably, the flange of the first element is circular in shape. A circular flange enables a simpler, less expensive manufacturing process, and has the same benefits in combination with the walls of the connection element as mentioned hereinbefore for the flange of the second element.

Alternatively, the first element has a rotatable connection to the connecting element of the second element around the central axis (A). If the first element can rotate in relation to the second element, this enables optimal adjustment to pipe bends and secure mounting in any direction, extending the scope of the bracket system's application.

Preferably, the flange of the second element has a rotatable connection to the connecting element. The bracket system allows for the use of multiple second elements, increasing the range of possible slope angles for pipes in relation to the surfaces to which a piping system is mounted.

Preferably, the bases of the first and second elements comprise a central opening.This allows the piping system to be mounted to the desired surfaces through the opening with e.g. screws or steel nails (109) (using a gas nailer).

Preferably, the flanges of the first and second elements comprise a central opening. This allows the piping system to be mounted to the desired surfaces through the opening with e.g. screws or steel nails (109) (using a gas nailer).

Preferably, the base of the second element, flange of the second element and connecting element form a single unit.

In a subsequent version, the invention relates to the bracket system according to one of the previous claims as a mounting system for drain lines, dust collection systems and optionally, water lines.

Certain and preferred implementations of the invention are described in the attached independent and dependent claims. Features of the dependent claims may be combined with those of independent and other dependent claims, where applicable and not only as expressly indicated in the claims.

The above and other features, functions and benefits of the present invention will be reflected in the following detailed description, in conjunction with the accompanying images, which serve as examples for the principles of the invention. This description is given as an example only, without limiting the scope of the invention. The reference numbers below refer to the accompanying images.

### BRIEF DESCRIPTION OF THE FIGURES

With specific reference to the figures, it must be emphasised that the specifics shown serve only as examples and for the purposes of illustrating the discussion of the various implementation forms of the present invention. They are being proposed with the aim of furnishing what is regarded as the most useful and immediate description of the principles and conceptual aspects of the invention. No attempt has been made in this respect to show more structural details of the invention other than those necessary for a fundamental understanding of the invention. The description in combination with the figures clarify how the various forms of the invention can be executed in practice for experts in the field.

The invention will now be described in more detail based on an example of an implementation as shown in the images.

In the images:
Figure 1 shows a cross-section of a first element of a bracket system according to a form of implementation of the invention;
Figure 2 shows a cross-section of a second element of a bracket system according to a form of implementation of the invention;
Figure 3 provides a perspective view of a bracket system according to a form of implementation of the invention.
Figure 4 provides a perspective view of a bracket system according to a form of implementation of the invention.

In the images, the same reference number refers to the same or an analogous element.

### DETAILED DESCRIPTION OF THE INVENTION

The present invention shall be described with regard to certain implementations and certain images, but is not limited to these, except by the claims. The images, as described further, are only schematic and non-exhaustive. In the images, certain elements may not be drawn to scale for illustrative purposes. Absolute and relative dimensions do not correspond to the actual limitations in practice.

Moreover, the terms first, second, further and similar in the description and in the claims are used to distinguish between similar elements and not necessarily for the description of a series, whether in time, space, order or in any other way. It is understood, however, that the terms used in this way are interchangeable under appropriate circumstances and that the implementations of this invention can be applied in an order other than that described or illustrated herein.

The term "comprises" as used in the claims should not be interpreted as limited to the following resources; other elements or steps are not excluded. It refers to the presence of the said features, whole numbers, steps or parts listed, but does not exclude the presence or addition of one or more other features, whole numbers, steps, parts or groups. The scope of the phrase "a product comprising A and B" should therefore not be limited to devices consisting solely of parts A and B. This means that the relevant parts of the product are A and B and other parts such as C may be present in the present invention.

Where reference is made in this specification to "one implementation" or "an implementation", this means that a particular function or structure, or a particular feature relating to the implementation, is included in at least one implementation of the present invention. Where "in one implementation" or "in an implementation" is mentioned at different points in this specification, this does not necessarily refer to the same implementation. In addition, certain functions, structures or features may be combined in any appropriate manner, as is considered applicable to an ordinary professional in one or more implementations.

Moreover, the description of examples of implementations and different features of the invention may sometimes be grouped in one implementation, image or description in order to streamline the disclosure and explain one or more inventive aspects. However, it should not be concluded from this method of disclosure that the claimed invention requires more features than is explicitly stated in each claim. As the following claims show, the inventive aspects can be found in less than all the features of one implementation mentioned above. For this reason, the claims that follow the detailed description are explicitly included in this detailed description, whereby each claim is a separate implementation of this invention.

Although some of the implementations described herein comprise some but not other features of other implementations, combinations of features of different implementations fall within the scope of the invention and together form different implementations that will be understood by professionals. For example, in the following claims all claimed implementations can be used in each combination.

The description given herein contains several specific details. However, the implementations of the invention are applied without these specific details. In other cases, known methods, structures and techniques were not detailed in order to keep this description clear.

The following terms are mentioned solely to explain the invention.

The term "close-fitting" describes a connection of two elements in which, after connection has been achieved, the connection surfaces of a first and a second element are in contact with each other, such as a close-fitting connection of two elements where a slot in one element has nearly the same width and thickness as the width and thickness of a flange on the second element, such that the connection surfaces of the first and second elements are touching each other in a tight (clamping) configuration, when the flange is inserted into the slot.

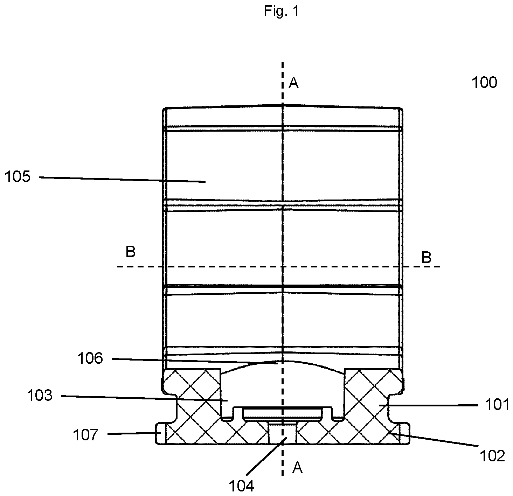

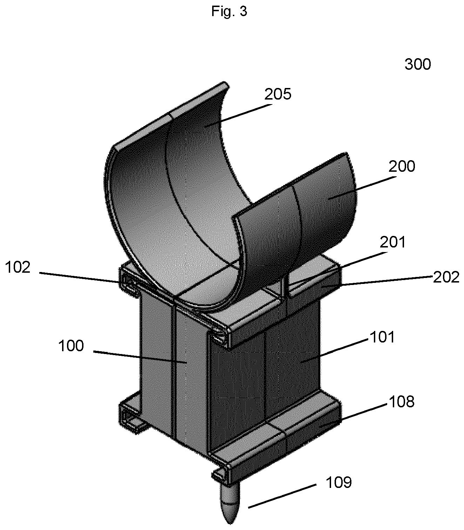

Figure 1 shows a cross-section of a first element (100) of a bracket system (300) according to a form of implementation of the invention. Preferably, the first element (100) is made of plastic. Alternatively, the first element (100) can be made of ferrous or non-ferrous metal. For example, the bracket system (300) can be used either inside or outside a building, with the choice of material for the bracket system (300) adapted accordingly. For example, in corrosive environments, use of a plastic bracket system (300) increases the piping system's lifespan. The first element (100) comprises a flange (102) and optionally a bracket (105). Preferably, the flange (102) of the first element (100) is circular in shape. Alternatively, as shown in Fig. 3, the flange (102) is rectangular or square in shape. Preferably, the flange (102) comprises an opening (104) that is centred in relation to the axis (A) (central axis) of the first element (100). Preferably, the bracket (105) is U-shaped or shaped like an open semi-circle. The bracket (105) is configured to fix a pipe securely in drain or water lines, while preferably also giving the pipe room to expand or move in other ways as applicable. Plastic brackets allow for rapid installation. Pipes can easily be pressed into place in the bracket (105) without further action. Use of the correct bracket is essential to ensure secure mounting. Failure of the pipe mount can lead to significant damage and high costs. It is therefore important to choose the correct mount. To this end, the bracket (105) is available in different inner diameters. Preferably, the inner diameter of the bracket (105) is suitable for standard pipe sizes used in plumbing applications, e.g. between 24 mm and 200 mm, for example 25, 32, 40, 50, 56, 63, 75, 80, 90, 100, 110, 125, 150, 160, 180 and 200 mm. Preferably, the bracket (105) comprises an opening (106) that is centred in the first element in relation to the central axis (A). Preferably, this opening (106) is circular in shape. Preferably, the opening (106) in the bracket (105) corresponds to the opening (104) in the flange (102). Preferably, the first element (100) comprises a base (101). The base (101) is located between the flange (102) and the bracket (105) in relation to the axis (A) of the first element (100). Preferably, the base (101) of the first element (100) is circular in shape. Alternatively, as shown in Fig. 3, the base (101) is rectangular or square in shape. Preferably, the base (101) comprises an opening (103) that is centred in relation to the axis (A) of the first element (100). Preferably, this opening (103) is circular in shape. Preferably, the opening (103) in the base (101) corresponds to the opening (106) in the bracket (105). Preferably, the base (101), flange (102) and bracket (105) form a single unit. Preferably, the first element (100) comprises two notches (107). Two notches (107) are located across from each other in the direction of the latitude axis (B) of the first element (100) on the outside of the flange (102). Preferably, each notch (107) is shaped like a circular segment so as to centre the first element (100) in relation to latitude axis (B). By centring the installation elements, pipes can be laid in a straight line if required, in electrical systems for example. This ease of centring the two elements is particularly true for the embodiment wherein the walls (204) of the connecting element (202) also comprise centrally positioned notches (206), such as for example shown in Figure 4.

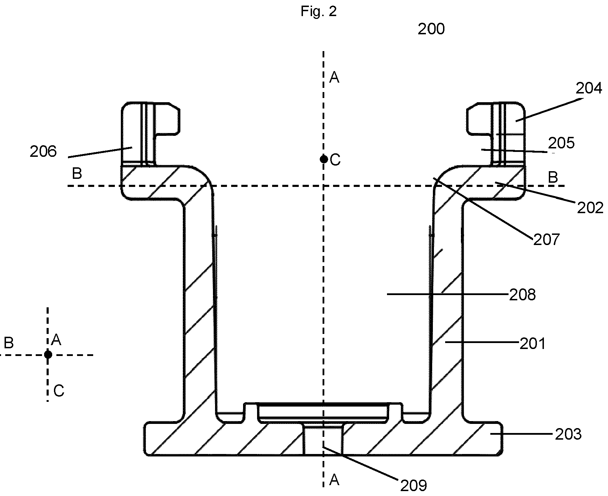

Figure 2 shows a cross-section of a second element (200) of a bracket system (300) according to a form of implementation of the invention. Preferably, the second element (200) is made of plastic (ferrous or non-ferrous materials). The second element (200) comprises a connecting element (202). Preferably, the connecting element (202) of the second element (200) is square in shape. Alternatively, as shown in Fig.3, the connecting element (202) is rectangular in shape. Alternatively, not shown, the connecting element (202) is triangular in shape. Preferably, the shape of the connecting element (202) is near-symmetrical in relation to the latitude axis (B) of the second element (200).This symmetry ensures an even distribution of the forces required to hold together the first element (100) and the second element (200), resulting in a stable installation. Preferably, the connecting element (202) comprises an opening (207) that is centred in relation to the axis (A) of the second element (200).Preferably, the axis (A) of the first element (100) coincides with the axis (A) of the second element (200).Preferably, the connecting element (202) comprises two walls (204), where each wall (204) comprises a slot (205) configured to slide over the flange (102) on the first element (100). Preferably, at least the primary orientation of the slot (205) is perpendicular to the surface of the axis (A) of the second element (200) and located on the inside of the wall (204).The "inside" here refers to the side closest or proximal to central axis (A).Preferably, the slot (205) has a width equal to the height of the flange (102) on the first element (100). Preferably, two walls (204) of the connecting element (202) are located opposite each other. Alternatively, not shown, two walls (204) of the connecting element (202) form an angle. As explained herein before, it is a characteristic of the bracket system according to the invention that the distance between the two opposite walls (204) of the connecting element (202) narrows in the direction parallel of the axis (B), i.e. the direction along the longitudinal axis (C) and perpendicular to the central axis (A) of the second element (200) in such a way as to ensure a close connection between the flange (102) of the first element (100) and the walls (204) of the connecting element (202). Expressed differently, the distance between the two opposite walls (204) of the connecting element (202) in a plane parallel to axis (B) narrows in the direction along the longitudinal axis (C) and towards the central axis (A). In one embodiment the distance between the opposite walls is larger at a position along longitudinal axis (C) which is more distal with respect to the central axis (A) than another position along said axis (C). Preferably, the walls (204) are funnel-shaped in cross-section in a plane parallel to axis (B) and perpendicular to the axis (A) of the second element (200). Preferably, this perpendicular plane coincides with the axis (C) of the second element (200).The term "funnel" or "funnel-shaped" preferably describes a flat cut of a truncated triangle. Preferably, this is an equilateral truncated triangle. Preferably, the funnel height corresponds with the latitude axis (B). The term "height" preferably describes a line that passes through a truncated corner point of the funnel and is perpendicular to the opposite side of the truncated triangle, which, in the context of the invention, corresponds to the outside of the wall (204). Alternatively, not shown, if the walls (204) form an angle, the height of one funnel corresponds to the latitude axis (B) and the height of another funnel corresponds to the longitudinal axis (C). Alternatively, not shown, the funnel height can be shifted left or right in relation to axis (B) or axis (C), moving the funnel height further away from the angle between the walls (204). Preferably, each of the walls (204) comprises a notch (206). Preferably, the notch (206) is rectangular in shape. Preferably, the width of the notch (206) corresponds to the length of the chord for the notch (107) in the first element (100). Preferably, the height of the notch (206) corresponds to the height of the wall (204). Preferably, the notches (206) are located across, i.e. opposite from each other in the direction of axis (B) of the second element (200), more in particular opposite from each other in the direction of axis (B) and at the height of the central axis (A) of the second element (200). Expressed differently, in a preferred embodiment the notches (206) are centrally positioned in the opposite walls (204) of the connecting element (202), i.e. the center of the notches coincides with the plane perpendicular to axis (B) and across central axis (A). The presence of the notches (206) makes centring the elements (100) and (200) of the bracket system (300) a quick process, as when the notch (107) of the first element (100) is visible through the notch (206) of the second element (200), this means the two elements are centred in relation to each other. The notches (206) in the walls also allow for quick disassembly of the elements, making the bracket system (300) suitable for reuse. Preferably, the first element (100) has a rotatable connection or is rotatable connected to the connecting element (202) of the second element (200) around the axis (A). As indicated above, rotating the first element (100) allows pipes to be bent in the desired direction. Preferably, the second element (200) comprises a base (201).Preferably, the base (201) of the second element (200) is circular in shape. Alternatively, as shown in Fig.3, the base (201) is rectangular or square in shape. Drain pipes installed in a plane parallel to the established surface clog more easily. If a drain pipe is positioned at a slope in relation to a horizontal surface such as the floor, the water will flow faster due to the influence of gravity, preventing clogs. For this reason, the bracket system must allow for variations in height, thereby facilitating the flow of water through the piping, reducing the chance of water stagnation and extending the lifespan of the pipes. As an implementation of this idea, the base (201) can have different heights. Preferably, the height of the base (201) is chosen in such a way that the total height of the second element is between 10 mm and 50 mm, e.g. 10 mm, 20 mm, 30 mm, 40 mm or 50 mm. Through the use of a second element (200) in different heights, the pipe slope angle can be varied in relation to the surfaces to which the piping system is installed. Preferably, the base (201) comprises an opening (208) that is centred in relation to the axis (A) of the second element (200).Preferably, the opening (208) in the base (201) coincides with an opening (207) in the connecting element (202). Preferably, the second element (200) comprises a flange (203). Preferably, the flange (203) of the second element (200) is circular in shape. Alternatively, shown in Fig. 3, the flange (102) is rectangular or square in shape. Preferably, the flange (203) comprises an opening (209) that is centred in relation to the axis (A) of the second element (200).Preferably, the opening (209) in the flange (203) coincides with the opening (208) in the base (201).Preferably, the second element (200) comprises two notches (210). Two notches (210) are located across from each other in the direction of the axis C of the second element (200) on the outside of the flange (203).Preferably, each notch (210) is shaped like a circular segment. Preferably, the base (201), flange (203) and connecting element (202) form a single unit.

Alternatively, not shown, the bracket system (300) comprises an additional second element (200). Preferably, the additional second element (200) comprises a connecting element (202), a base (201) and optionally, a flange (203), analogous to the first second element (200) as shown in Figure 2. Preferably, the flange (203) of the first second element (200) has a rotatable connection to the connecting element (202) of the additional second element (200).

In Fig.3, another form of implementation of a bracket system (300) is illustrated using a perspective view. Again, according to the invention, the bracket system (300) comprises a first element (100) and a second element (200).The first element (100) comprises a base (101) and a flange (102) and a connecting element (108) similar to the connecting element (202) found on the second element. The second element (200) comprises a connecting element (202), a base (201) and a bracket (205), the latter analogous to the bracket (105) of the first element described hereinbefore. This implementation differs from the bracket system (300) shown in Fig. 1 and Fig.2 in that in this form of implementation, the base (101) and flange (102) of the first element (100) and the base (201) and flange (203) of the second element (200) are rectangular or square in shape, as shown in Fig.3, and in that the bracket is now present on the second element instead.

In Fig.4, another form of implementation of a bracket system (300) is illustrated using a perspective view. Again, according to the invention, the bracket system (300) comprises a first element (100) and a second element (200). This figure shows the narrowing of the distance between the walls (204) of the connecting element (202) in the direction along the longitudinal axis (C) and in the direction of the central axis (A). It further shows the centrally positioned notches (206) in said walls (204). On the flange (102) of the first element this figure also shows the notches (107). As explained before, together these notches can be used for centering the two elements with respect to one another. The narrowing walls of the connecting element and the circular flange are configured to realize a close-fitting when slid into one another.

Preferably, the bracket system (300), as illustrated in Fig. 1-4, can be used as a mounting system for drain lines and optionally, water lines.

## Claims

1. A bracket system (300) comprising at least one first element (100) and a second element (200), where the second element (200) comprises a connecting element (202) configured to connect to a flange (102) on the first element (100), wherein the connecting element (202) comprises two walls (204), where each wall (204) comprises a slot (205) configured to slide over the flange (102) on the first element (100), where the distance between the two opposite walls (204) of the connecting element (202) narrows in the direction perpendicular of the central axis (A) in such a way as to ensure a close connection between the flange (102) on the first element (100) and the connecting element (202), **characterized in that** each of the walls (204) comprises a notch (206), wherein the notches (206) are preferably centrally positioned.

2. The bracket system (300) according to claim 1, where the second element (200) further comprises a base (201) and optionally, a flange (203).

3. The bracket system (300) according to claim 1, where the first element (100) further comprises a base (101) and optionally a connection element (108).

4. The bracket system (300) according to claim 1, whereby the shape of the connecting element (202) is near-symmetrical in relation to the axis (B) of the second element (200).

5. The bracket system (300) according to claim 1, where the connecting element (202) comprises two opposite walls (204), where each wall (204) comprises a slot (205) configured to slide over the flange (102) on the first element (100).

6. The bracket system (300) according to claim 5, where the walls (204) are funnel-shaped in cross-section in the plane perpendicular to the central axis (A).

7. The bracket system (300) according to claim 2, where the base (201) of the second element (200) is circular in shape.

8. The bracket system (300) according to claim 2, where the flange (203) of the second element (200) and/or the flange (102) of the first element (100) is circular in shape.

9. The bracket system (300) according to claim 3, where the base (101) of the first element (100) is circular in shape.

10. The bracket system (300) according to one of the previous claims, where the first element (100) has a rotatable connection to the connecting element (202) of the second element (200) around the central axis (A).

11. The bracket system (300) according to one of the previous claims, where the flange (203) has a rotatable connection to the connecting element (202).

12. The bracket system (300) according to claim 1, where the base (101, 201) comprises a central opening (103, 208).

13. The bracket system (300) according to claim 1 or claim 2, where the base (102, 203) comprises a central opening (104, 209).

14. The bracket system (300) according to one of the previous claims, where the base (101, 201), flange (102, 203) and connecting element (202) form a single unit.

15. The use of the bracket system (300) from claims 1 to 14 as a mounting system for drain lines, electrical systems, dust collection systems and optionally, water lines.

## Patentansprüche

1. Halterungssystem (300), umfassend mindestens ein erstes Element (100) und ein zweites Element (200), wobei das zweite Element (200) ein Verbindungselement (202) umfasst, das konfiguriert ist, um mit einem Flansch (102) auf dem ersten Element (100) zu verbinden, wobei das Verbindungselement (202) zwei Wände (204) umfasst, wobei jede Wand (204) einen Schlitz (205) umfasst, der konfiguriert ist, um über den Flansch (102) auf dem ersten Element (100) zu gleiten, wobei sich der Abstand zwischen den zwei gegenüberliegenden Wänden (204) des Verbindungselements (202) in der Richtung senkrecht zu der Mittelachse (A) auf derartige Weise verengt, um eine enge Verbindung zwischen dem Flansch (102) auf dem ersten Element (100) und dem Verbindungselement (202) sicherzustellen, **dadurch gekennzeichnet, dass** jede der Wände (204) eine Kerbe (206) umfasst, wobei die Kerben (206) vorzugsweise mittig positioniert sind.

2. Halterungssystem (300) nach Anspruch 1, wobei das zweite Element (200) ferner eine Basis (201) und optional einen Flansch (203) umfasst.

3. Halterungssystem (300) nach Anspruch 1, wobei das erste Element (100) ferner eine Basis (101) und optional ein Verbindungselement (108) umfasst.

4. Halterungssystem (300) nach Anspruch 1, wobei die Form des Verbindungselements (202) in Bezug auf die Achse (B) des zweiten Elements (200) nahezu symmetrisch ist.

5. Halterungssystem (300) nach Anspruch 1, wobei das Verbindungselement (202) zwei gegenüberliegende Wände (204) umfasst, wobei jede Wand (204) einen Schlitz (205) umfasst, der konfiguriert ist, um über den Flansch (102) auf dem ersten Element (100) zu gleiten.

6. Halterungssystem (300) nach Anspruch 5, wobei die Wände (204) in der Ebene senkrecht zu der Mittelachse (A) einen trichterförmigen Querschnitt aufweisen.

7. Halterungssystem (300) nach Anspruch 2, wobei die Basis (201) des zweiten Elements (200) kreisförmig ist.

8. Halterungssystem (300) nach Anspruch 2, wobei der Flansch (203) des zweiten Elements (200) und/oder der Flansch (102) des ersten Elements (100) kreisförmig ist.

9. Halterungssystem (300) nach Anspruch 3, wobei die Basis (101) des ersten Elements (100) kreisförmig ist.

10. Halterungssystem (300) nach einem der vorstehenden Ansprüche, wobei das erste Element (100) eine drehbare Verbindung mit dem Verbindungselement (202) des zweiten Elements (200) um die Mittelachse (A) herum aufweist.

11. Halterungssystem (300) nach einem der vorstehenden Ansprüche, wobei der Flansch (203) eine drehbare Verbindung mit dem Verbindungselement (202) aufweist.

12. Halterungssystem (300) nach Anspruch 1, wobei die Basis (101, 201) eine Mittelöffnung (103, 208) aufweist.

13. Halterungssystem (300) nach Anspruch 1 oder 2, wobei die Basis (102, 203) eine Mittelöffnung (104, 209) aufweist.

14. Halterungssystem (300) nach einem der vorstehenden Ansprüche, wobei Basis (101, 201), der Flansch (102, 203) und das Verbindungselement (202) eine einzelne Einheit ausbilden.

15. Verwendung des Halterungssystems (300) nach den Ansprüchen 1 bis 14 als ein Montagesystem für Abwasserleitungen, elektrische Systeme, Staubsammelsysteme und optional Wasserleitungen.

## Revendications

1. Système de support (300) comprenant au moins un premier élément (100) et un second élément (200), où le second élément (200) comprend un élément de liaison (202) conçu pour se relier à une bride (102) sur le premier élément (100), dans lequel l'élément de liaison (202) comprend deux parois (204), où chaque paroi (204) comprend une fente (205) conçue pour glisser au-dessus de la bride (102) sur le premier élément (100), où la distance entre les deux parois (204) opposées de l'élément de liaison (202) se rétrécit dans la direction perpendiculaire à l'axe central (A) de manière à assurer une liaison étroite entre la bride (102) sur le premier élément (100) et l'élément de liaison (202), **caractérisé en ce que** chacune des parois (204) comprend une encoche (206), dans lequel les encoches (206) sont de préférence positionnées de manière centrale.

2. Système de support (300) selon la revendication 1, où le second élément (200) comprend en outre une base (201) et, éventuellement, une bride (203).

3. Système de support (300) selon la revendication 1, où le premier élément (100) comprend en outre une base (101) et éventuellement un élément de liaison (108).

4. Système de support (300) selon la revendication 1, moyennant quoi la forme de l'élément de liaison (202) est quasi-symétrique par rapport à l'axe (B) du second élément (200).

5. Système de support (300) selon la revendication 1, où l'élément de liaison (202) comprend deux parois (204) opposées, où chaque paroi (204) comprend une fente (205) conçue pour glisser au-dessus de la bride (102) sur le premier élément (100).

6. Système de support (300) selon la revendication 5, où les parois (204) ont une section transversale en forme d'entonnoir dans le plan perpendiculaire à l'axe central (A).

7. Système de support (300) selon la revendication 2, où la base (201) du second élément (200) est de forme circulaire.

8. Système de support (300) selon la revendication 2, où la bride (203) du second élément (200) et/ou la bride (102) du premier élément (100) est de forme circulaire.

9. Système de support (300) selon la revendication 3, où la base (101) du premier élément (100) est de forme circulaire.

10. Système de support (300) selon l'une des revendications précédentes, où le premier élément (100) a une liaison rotative avec l'élément de liaison (202) du second élément (200) autour de l'axe central (A).

11. Système de support (300) selon l'une des revendications précédentes, où la bride (203) a une liaison rotative avec l'élément de liaison (202).

12. Système de support (300) selon la revendication 1, où la base (101, 201) comprend une ouverture centrale (103, 208).

13. Système de support (300) selon la revendication 1 ou la revendication 2, où la base (102, 203) comprend une ouverture centrale (104, 209).

14. Système de support (300) selon l'une des revendications précédentes, où la base (101, 201), la bride (102, 203) et l'élément de liaison (202) forment une seule unité.

15. Utilisation du système de support (300) selon les revendications 1 à 14 comme système de montage pour des conduites d'évacuation, des systèmes électriques, des systèmes de collecte de poussière et, éventuellement, des conduites d'eau.
